**Europäisches Patentamt**

**European Patent Office**

**Office européen des brevets**

(11) Veröffentlichungsnummer: **0 502 490 A1**

## EUROPÄISCHE PATENTANMELDUNG

(21) Anmeldenummer: **92103654.7**

(22) Anmeldetag: **03.03.92**

(51) Int. Cl.5: **B29B 17/02**

(30) Priorität: **05.03.91 DE 4106942**

(43) Veröffentlichungstag der Anmeldung:
**09.09.92 Patentblatt 92/37**

(84) Benannte Vertragsstaaten:
**AT BE CH DE DK ES FR GB IT LI NL SE**

(71) Anmelder: **REAL GmbH**
**Gartenweg 3**
**W-8717 Mainbernheim(DE)**

(72) Erfinder: **Hentschel, Martin**
**Gartenweg 3**
**W-8717 Mainbernheim(DE)**

(54) **Wiederaufbereitungsanlage für Kunststoffabfälle.**

(57) Eine Wiederaufarbeitungsanlage für Kunststoffabfälle, umfassend zumindest die Fertigungseinrichtungen Zerkleinerungsanlage, Silo und Extruder, die durch Stetigförderer verbunden sind, wobei die Funktionseinheiten als Transporteinheiten (1,2,3,4) gestaltet und lückenlos nach Art eines Baukastens neben- und/oder aufeinanderfügbar sind. Die Transporteinheiten sind hinsichtlich ihrer Länge, Breite und Höhe auf einem einheitlichen Grundraster aufgebaut. Neben ganzen Einheiten können halbe und viertel Einheiten vorhanden sein, die gegen die ganzen Einheiten austauschbar und mit einander und den ganzen Einheiten zusammenfaßbar sind.

Fig.1

Die Erfindung betrifft eine beweglich einsetzbare Wiederaufbereitungsanlage für Kunststoffabfälle, umfassend zumindest die Fertigungseinrichtungen Zerkleinerungsanlage,Silo und Extruder, die durch Stetigförderer verbunden, als betriebsbereite Funktionseinheiten ausgebildet und als Transporteinheiten gestaltet sind.

Eine Wiederaufbereitungsanlage der vorgenannten Art ist aus der US PS 43 44 579 bekannt. Die einzelnen Funktionseinheiten sind dabei mit Rollen versehen und nach Art von Kleingeräten verschiebbar gestaltet. Sie sind durch frei verlegte Leitungen verbunden, was die Inbetriebnahme nach einer Ortsverlagerung erschwert und Fachkenntnisse bei der Montage voraussetzt. Ein mobiler Einsatz derFunktionseinheiten im Sinne ständig wechselnder Einsatzorte wird in der Druckschrift nicht erwähnt.

Es sind stationäre Wiederaufbereitunganlagen für Kunststoffabfälle bekannt, die die verschiedenen Fertigungseinrichtungen als eine in sich geschlossene Funktionseinheit umfassen. Sie dienen primär der Herstellung von stranggepreßten Profilen und flächigen Materialien. Die Montage erfolgt gewöhnlich so, daß die Wiederaufbereitungsanlage von verschiedenen Rohstoffquellen gut erreichbar ist. Die sich im Durchschnitt ergebende Wegelänge istdementsprechend groß. Die mit Produkten aus wiederverwendeten Kunststoffabfällen erzielbaren Preise sindvergleichsweise gering. Die Amortisationszeit der stationären Wiederaufbereitungsanlagen ist dadurch relativ groß.

Der Erfindung liegt die Aufgabe zugrunde, eine Wiederaufbereitungsanlage der eingangs genannten Art derart weiterzuentwickeln, daß sich eine deutlich reduzierte Amortisationszeit ergibt.

Diese Aufgabe wird erfindungsgemäß bei einer Wiederaufbereitungsanlage der eingangs genannten Art mit den kennzeichnenden Merkmalen von Anspruch 1 gelöst. Auf vorteilhafte Ausgestaltungen nehmen die Unteransprüche Bezug.

Bei der erfindungsgemäßen Wiederaufbereitungsanlage für Kunststoffabfälle ist jede enthaltene Fertigungseinrichtung als betriebsbereite Funktionseinheit ausgebildet und als Transporteinheit gestaltet. Die Wiederaufbereitungsanlage kann dadurch nach Bedarf zu beliebigen und gegebenenfalls unabhängig voneinander betriebenen Sammelplätzen für Kunststoffabfälle verlagert und hierdurch wesentlich besser ausgelastet werden als bisher. Neben einer wesentlichen Verkürzung des durchschnittlichen Transportweges zwischen den zu verabeitenden Kunststoffabfällen und der Wiederaufbereitungsanlage kann hierbei auch die Verkürzung der Transportwege zwischen der Wiederaufbereitungsanlage und dem Verwender der erzeugten Produkte Bedeutung erlangen. Der Mengenausstoß der Wiederaufbereitungsanlage läßt sich dementsprechend steigern. Großanlagen, die gegebenenfalls im Lohnbetrieb auf den Kunststoffabfallsammelplätzen einer Vielzahl von Industriebetrieben und Kommunen eingesetzt werden können, ermöglichen darüberhinaus die Herstellung von speziell benötigten,hochwertigen Produkten unter deutlicher Reduzierung des sich insgesamt ergebenden Abfallvolumens.

Die Transporteinheiten sind unter Vermeidung von Lücken unmittelbar zu einer in sich geschlossenen, baukastenartig aufgebauten Produktionseinheit zusammenfaßbar und hierdurch ohne Fachpersonal fehlerfrei schnell und einfach aufzubauen und zu zerlegen. Die Verwendung von frei verlegten Verbindungsleitungen zwischen den einzelnen Funktionseinheiten ist nicht mehr erforderlich. Der erforderliche Platzbedarf ist auf das absolute Minimum reduziert.

Die Fertigungseinrichtungen können auf gegebenenfalls motorisierten Fahrgestellen montiert sein.

Es resultiert bei einer solchen Ausgestaltung eine optimale Mobilität sowie die Möglichkeit, die Wiederaufbereitungsanlage mit minimalem Aufwand an Personalkosten betreiben zu können.

Ein vergleichsweise reduzierter Investitionsbedarf ergibt sich dann, wenn die Transporteinheiten auf Wechselpritschen für LKW montiert sind. Die Verlagerung zu einer neuen Kunstoffabfallsammelstelle kann bei einer solchen Ausbildung gegebenenfalls im Lohnverfahren durch Speditionen bewirkt werden.

Unter arbeitstechnischen Gesichtspunkten hat es sich als vorteilhaft bewährt, wenn die Fertigungseirichtungen im wesentlichen ebenerdig aufgestellt werden können. Unter diesem Gesichtspunkt ist es nach einer beispielhaften Ausgestaltung vorgesehen, daß die Fertigungseinrichtungen auf Transportpaletten montiert sind, beispielsweise solchen, die die Grundfläche gebräuchlicher Bahn bzw. Schiffscontainer haben. Das Abstellen und das Aufnehmen mit Hilfe der Containerverladeeinrichtungen moderner LKW bereiten insbesondere dann keine Probleme, wenn die Transporteinheiten von übereinstimmender Größe oder mit übereinstimmenden Verladehilfsmitteln versehen sind.

Kunststoffabfälle neigen in hohem Maße dazu, Fremdstoffe zu binden, beispielsweise Wasser und/oder Schmutz. In bezug auf die Herstellung hochwertiger Produkte kann es daher nötig sein, eine Vorbehandlung vor der eigentlichen Verarbeitung vorzunehmen, beispielsweise eine Reinigung und/oder Trocknung. Zumindest die hierfür benötigten Fertigungeeinrichtungen sollten klimatisiert und von der Umgebung abgeschlossen sein. Andere Fertigungseinrichtungen, beispielsweise die Zerkleinerungsanlage, die Silos, die Mischstationen und der Extruder sind technisch derart anspruchsvoll, daß sich auch hierfür eine von der Umgebung abgetrennte und gegebenenfalls klimatisierte Ausbildung der aufnehmenden Transporteinheiten empfiehlt, zumindest aber eine überdachte Aufstellung der Fertigungseinrichtungen innerhalb der Transporteinheiten.

Eine verbesserte Zugänglichkeit der Fertigungeinrichtungen ergibt sich, wenn die Transporteiheiten zumindest auf einer Seite durch eine kontinuierlich durchgehende, herabklappbare Seitenwand begrenzt sind. Eine entsprechend ausgebildete und herabgeklappte Seitenwand kann darüberhinaus der verschmutzungsgeschützten Zwischenlagerung von Rohstoffen und/oder Fertigerzeugnissen dienen.

Als zweckmäßig hat es sich erwiesen, wenn die Transporteinheiten hinsichtlich ihrer Länge, Breite und/oder Höhe auf einem einheitlichen Grundraster aufgebaut sind, welches nur ganze, halbe und viertel Einheiten umfaßt. Neben der Möglichkeit, die Transporteinheiten nebeneinander liegend direkt aneinander anfügen zukönnen ist dabei häufig die Möglichkeit von Vorteil, die Transporteinheiten bei Bedarf auch direkt aufeinander liegend zu verbinden zu können. Insbesondere Montage-, Transportund Lagerungsprobleme lassen sich hierdurch häufig vereinfachen. Die gesamte Wiederaufbereitungsanlage läßt sich bei einer solchen Ausbildung fabrikmäßig als eine in sich geschlossene Anlage betreiben und zeichnet sich dementsprechend durch eine ausgezeichnete Wirtschaftlichkeit aus.

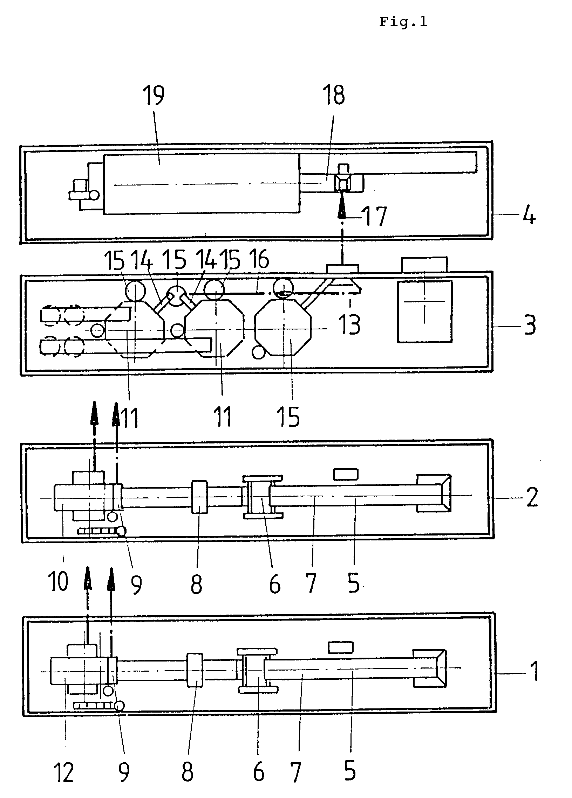

Die Erfindung wird nachfolgend anhand der Zeichnung weiter verdeutlicht. Die Fig. 1 zeigt vier nebeneinander aufgestellte Bahncontainer in der Draufsicht, von denen der Erste 1 die vollständige Aufbereitungsanlage für Hartkunststoffe enthält, der Zweite 2 die vollständige Aufbereitungsanlage für Weichkunststoffe, der Dritte 3 die vollständige Lager- und Mischeinrichtung für zerkleinerte Kunststoffe, Farb- und Füllstoffe, der Vierte 4 eine vollständige Verwertungsanlage. Letztere besteht vorliegend aus einem Extruder, dem eine Vielzahl von karusselähnlich umlaufenden Formwerzeugen zugeordnet ist. Die Bahncontainer sind während der bestimmungsgemäßen Verwendung unter Vermeidung von Lücken unmittelbar aneinander oder aufeinander gefügt, wobei die Verbindungsanschlüsse so gestaltet sind, daß sich eine automatische Kopplung ergibt.

Die Bahncontainer sind bei dem gezeigten Beispiel von übereinstimmender Größe. Sie können je nach Bedarf der einzelnen Funktion durch halbe oder viertel Funktionseinheiten mit entsprechend verminderter Leistungsfähigkeit ersetzt sein, die mit der gezeigten Ausführung innerhalb des maßlichen Grundrasters lückenlos zusammengefaßt und zu einer betriebsbereiten Wiederaufbereitungsanlage für Kunststoffabfälle ergänzt werden können.

Der Transport der zerkleinerten Kunststoffe zwischen den verschiedenen Fertigungseinrichtungen wird mit pneumatischen Stetigförderern bewirkt, die in den Funktionseinheiten enthalten sind. Diese bestehen aus Gebläsen üblicher Bauart. Für die herzustellenden Verbindungen ist eine integrierte Kombination von Ver- und Entsorgungsleitungen vorgesehen, die durch Schnellverschlüsse verbindbar sind.

Der Arbeitsablauf während der Benutzung läßt sich wie folgt beschreiben:

Das grob sortierte Rohmaterial, welches Weich- oder Hartkunststoffe umfassen kann, wird auf das Förderband 5 aufgegeben und in einer Schredderanlage 6 zerkleinert. Das Förderband 7 transportiert das zerkleinerte Material an einer Magnetplatte 8 oder einem magnetischen Rollabscheider 8.1 vorbei zu einem Verteilerkasten 9. Je nach Materialart schließt sich die nächste Bearbeitungstufe an.

Folienmaterialien werden von dem Verteilerkasten 9 direkt in die Agglomerieranlage 10 transportiert und zu einem rieselfähigen Agglomerat verdichtet. Das Agglomerat kann in Säcke verpackt und gelagert und dem Direktvertrieb zugeführt oder in einen der Vorratssilos 11 geblasen werden.

Hartmaterialien werden von dem Verteilerkasten 9 direkt in die Schneidmühle 12 gegeben. Das von dieser gebildete Mahlgut wird in einen der Vorratssilos 11 geblasen. Eine eventuell gewünschte Sackabfüllung des Mahlgutes kann im Bereich der mit der Bezugsziffer 13 bezeichneten Stelle erfolgen.

Mit Hilfe von Entleerungsschnecken 14 läßt sich ein Mischapparat 15 von siloartigem Aufbau füllen. Innerhalb des Mischapparates 15 wird das eingefüllte Material homogenisiert und wenn nötig nachgetrocknet. Über einen weiteren Schneckenförderer 16 sowie eine Förderschnecke 17 wird die Verwertungsmaschine 18 aus einem Mischapparate 15 mit homogenisiertem Material versorgt. Ein anderer Mischapparat 15 kann zwischenzeitlich gegebenenfalls zur Vorbereitung der nächsten Mischung verwendet werden.

Die Verwertungsmaschine 18 besteht im vorliegenden Falle aus einem Extruder, dem mehrere und alternativ in Eingriff bringbare Formerkzeuge 19 zugeordnet sind. Das für die Abkühlung der Formwerkzeuge benötigte Kühlwasser wird in einer Kühlanlage abgekühlt.

Die erhaltenen Kunststoffprodukte werden in einem Abkühlwagen gelagert. Nach ca. 6 bis 8 Stunden erreichen sie je nach Wandstärke die Endstabilität.

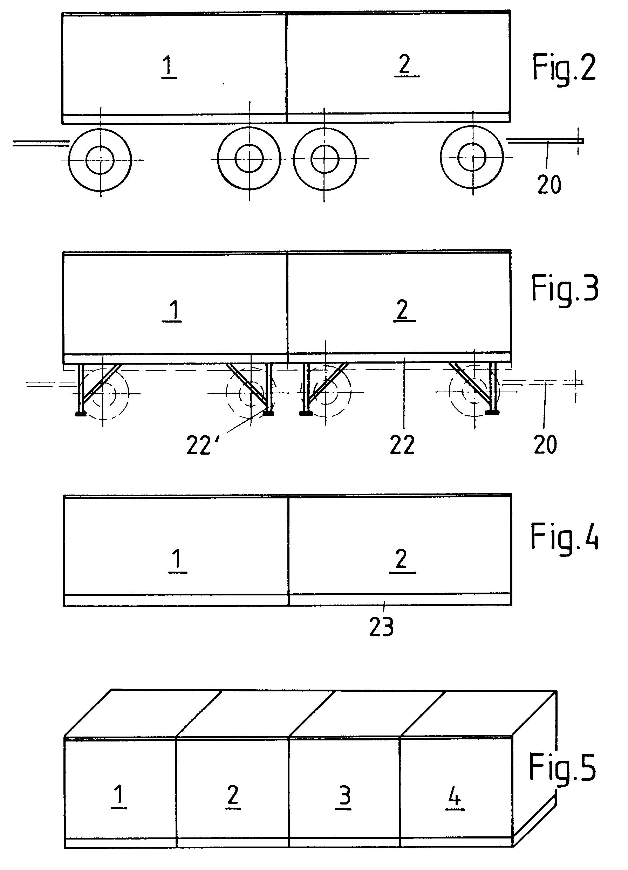

In den Fig. 2 bis 7 werden weitere Einzelheiten der erfindungsgemäßen Wiederaufbereitungsanlage für Kunststoffabfälle gezeigt. Diese umfaßt im einfachsten Falle zwei Transporteinheiten, wovon die eine die Aufbereitungsanlagen für die zu verarbeitenden Kunstoffabfälle enthält und die andere die zu deren Weiterverarbeitung benötigten Einrichtungen. Hinzu kommen können weitere Transporteinheiten, die Lagereinrichtungen enthalten, Energiebereitstellungsanlagen und/oder Sozialräume. Dabei ist es in allen Fällen von wesentlicher Bedeutung, daß die einzelnen Transporteinheiten unmittelbar miteinander verbunden werden können. Sie können jedoch bedarfsweise auch in einem Abstand voneinander aufgestellt und durch Leitungen miteinander verbunden werden.

Fig. 2 zeigt eine Wiederaufbereitungsanlage, bei der zwei Transporteinheiten 1,2 auf Anhängerfahrgestellen 20 für LKW - Zugmaschinen montiert sind. Die beiden Fahrgestelle 20 werden zum Aufbau der betriebsbereiten Anlage mit ihrer Rückseite derart gegeneinander geschoben, daß sich eine lückenlose Verbindung zwischen den beiden Transporteinheiten 1,2 ergibt.

In Fig 3 wird eine Ausführung der Wiederaufbereitungsanlage gezeigt, bei der zwei der Transporteinheiten 1,2 auf Wechselpritschen 22 für LKW montiert sind. Die Wechselpritschen 22 sind mit ausklappbaren Stützen 22' versehen, die auf den Untergrund herabgelassen werden können und es gestatten, die Wechselpritschen 22 soweit anzuheben, daß die Fahrgestelle 20 herausgezogen werden können. Die Fahrgestelle können dadurch während des Betriebs der Wiederaufbereitungsanlage für andere Zwecke eingesetzt werden. Die beiden Transporteinheiten 1,2 sind auch bei diesem Ausführungsbeispiel mit ihrer Rückseite lückenlos gegeneinander gesetzt. Sie können bedarfsweise durch nicht dargestellte, weitere Transporteinheiten ergänzt werden, welche die gezeigten Transporteinheiten 1,2 in Längsrichtung oder in seitlicher Richtung zu noch größeren Gesamtanlagen mit entsprechend vergrößerter Kapazität erweitern.

Fig. 4 nimmt bezug auf eine Ausführung, bei der zwei Transporteinheiten 1,2 auf Transportpaletten 23 montiert und unmittelbar aneinander anschließend zu einer betriebsbereiten Wiederaufbereitungsanlage vereint sind. Auch bei dieser Ausführung bietet es sich an, die gezeigten Transporteinheiten bei Bedarf durch weitere Transporteinheiten zu ergänzen, welche sich in Längs- oder Querrichtung an die gezeigten Transporteinheiten 1,2 anschließen.

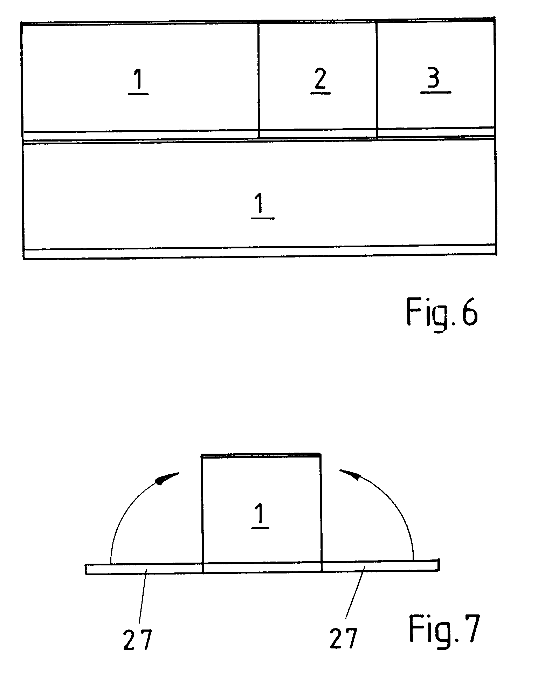

Fig. 5 zeigt einige zu einer großen Wiederaufbereitungsanlage zusammengefügte Transporteinheiten 1,2,3,4, welche von übereinstimmender Länge, Breite und Höhe sind. Durch das übereinstimmende Grundmaß ist das Zusammenfügen von derartigen Transporteinheiten zu großen Wiederaufbereitungsanlagen besonders unproblematisch.

Fig. 6 nimmt bezug auf eine betriebsbereite Wiederaufbereitungsanlage, bei der die Transporteinheiten 1,2,3,4 hinsichtlich ihrer Länge, Breite und Höhe auf einem übereistimmenden Grundraster aufgebaut sind, wobei innerhalb des Grundrasters ganze, halbe und Viertelgrößen der Transporteinheiten 1,2,3,4 vorgesehen sind. Die Kapazitäten der einzelnen Funktionseinheiten variieren mit der jeweiligen Größe. Sie sind innerhalb der Gesamtanlage derart aufeinander abgestimmt, daß eine jede Funktionseinheit in optimaler Weise ausgelastet ist. Hierdurch ergibt sich ein optimaler Wirkungsgrad der Gesamtanlage. Die Kapitalbindungskosten und die sich während der Benutzung der Wiederaufbereitungsanlage ergebenden Betriebskosten sind dadurch auf ein Minimum reduziert.

Darüberhinaus wird in Fig. 6 gezeigt, daß die einzelnen Funktionseinheiten 1,2,3,4 nicht nur neben- sondern auch aufeinanderliegend zusamenfügbar sind. Der für den Betrieb der Wiederaufbereitungsanlage erforderliche Platzbedarf ist hierdurch auf das absolute Minimum reduziert. Sämtliche Funktionseinheiten 1,2,3,4 sind gegenüber der Umgebung abgeschlossen und mit einem Dach versehen. Der Betrieb einer solchen Wiederaufbereitungsanlage im freien Gelände ist dadurch problemlos möglich.

In Fig. 7 ist eine Transporteinheit 7 in einer Ansicht von vorn gezeigt, die auf zwei einander gegenüberliegenden Seiten durch kontinuierlich durchgehende, herabklappbare Seitenwände begrenzt ist. Die Zugänglichkeit des Innenraumes ist hierdurch verbessert. Zusätzlich werden durch die herabgeklappten Seitenwände 27 Flächen gewonnen, die begeh- und befahrbar sind. Die Flächen können bedarfsweise als Wege-, Arbeits- oder Lagerflächen verwendet werden. Bei einem Einsatz der Wiederaufbereitungsanlage im Bereich von unbefestigten Geländeflächen ist das von großem Vorteil.

## Patentansprüche

1. Beweglich einsetzbare Wiederaufbereitungsanlage für Kunststoffabfälle, umfassend zumindest die Fertigungseinrichtungen Zerkleinerungsanlage, Silo und Extruder, die durch Stetigförderer verbunden, als betriebsbereite Funktionseinheiten ausgebildet und als Transporteinheiten gestaltet sind, dadurch gekennzeichnet, daß die Transporteinheiten (1,2,3,4) zu einer in sich geschlossenen, baukastenartig aufgebauten Produktionseinheit zusammenfaßbar sind.

2. Wiederaufbereitungsanlage nach Anspruch 1, dadurch gekennzeichnet, daß die Transporteinheiten (1,2,3,4) auf Fahrgestellen montiert sind.

**3.** Wiederaufbereitungsanlage nach Anspruch 1, dadurch gekennzeichnet, daß die Transporteinheiten (1,2,3,4) auf Wechselpritschen montiert sind.

**4.** Wiederaufbereitungsanlage nach Anspruch 1, dadurch gekennzeichnet, daß die Transporteinheiten (1,2,3,4) auf Transportpaletten montiert sind.

**5.** Wiederaufbereitungsanlage nach Anspruch 1 bis 4, dadurch gekennzeichnet, daß die Transporteinheiten (1,2,3,4) von übereinstimmender Länge, Breite und/oder Höhe sind.

**6.** Wiederaufbereitungsanlage nach Anspruch 1 bis 4, dadurch gekennzeichnet, daß die Transporteinheiten (1,2,3,4) hinsichtlich ihrer Länge, Breite und/oder Höhe auf einem übereinstimmenden Grundraster aufgebaut sind.

**7.** Wiederaufbereitungsanlage nach Anspruch 6, dadurch gekennzeichnet, daß innerhalb des Grundrasters Ganze, Halbe und Viertelgrößen der Transporteinheiten (1,2,3,4) vorgesehen sind.

**8.** Wiederaufbereitungsanlage nach Anspruch 1 bis 6, dadurch gekennzeichnet, daß die Transporteinheiten (1,2,3,4) wahlweise unmittelbar nebeneinander oder aufeinanderliegend zusammenfügbar sind.

**9.** Wiederaufbereitungsanlage nach Anspruch 1 bis 8, dadurch gekennzeichnet, daß die Transporteinheiten (1,2,3,4) überdacht sind.

**10.** Wiederaufbereitungsanlage nach Anspruch 1 bis 9, dadurch gekennzeichnet, daß die Transporteinheiten (1,2,3,4) zumindest auf einer Seite durch eine kontinuierlich durchgehende, herabklappbare Seitenwand begrenzt sind.

Fig.1

Fig.2

20

Fig.3

22'        22        20

Fig.4

23

Fig.5

Fig.6

Fig.7

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | NL-A-7 413 089 (WAVIN)<br>* Seite 1, Zeile 13 - Seite 4, Zeile 4; Abbildung * | 1-4 | B 29 B 17/02 |
| Y | | 5-10 | |
| | --- | | |
| Y | AUFBEREITUNGS-TECHNIK, Band 31, Nr. 7, Juli 1990, Seiten 372-377, Wiesbaden, DE; Dr. R. HENNIG et al.: "Bodenreinigung mit dem Harbauer-Verfahren am Beispiel der mobilen Bodenreinigungsanlage in Wien" * Abbildungen 5-7; Seite 376, Abschnitt 4.3 - Seite 377, Abschnitt 4.4 * | 5-10 | |
| | --- | | |
| A | PATENT ABSTRACTS OF JAPAN, Band 5, Nr. 190 (M-100), 4. Dezember 1981; & JP-A-56 111 635 (SATO SHINOBU) 03-09-1981 * Zusammenfassung; Abbildung * | 1 | |
| | --- | | |
| A | DE-A-3 838 894 (VOELSKOW) * Ansprüche 1,3; Abbildung; Seite 1, Säule 1, Zeilen 43-61 * | 1-6,9 | RECHERCHIERTE SACHGEBIETE (Int. Cl.5)<br><br>B 29 B |
| | --- | | |
| A | EP-A-0 407 679 (GOVONI S.p.A.) * Anspruch; Abbildung 5 * | 1 | |
| | ----- | | |

Der vorliegende Recherchenbericht wurde für alle Patentansprüche erstellt

| Recherchenort | Abschlußdatum der Recherche | Prüfer |
|---|---|---|
| DEN HAAG | 07-04-1992 | PIPPING L.E.L. |

EPO FORM 1503 03.82 (P0403)